# EUROPÄISCHE PATENTSCHRIFT

(11) **EP 3 239 759 B1**
(45) Veröffentlichungstag und Bekanntmachung des Hinweises auf die Patenterteilung: **24.04.2024**
(21) Anmeldenummer: 17167741.2
(22) Anmeldetag: 24.04.2017
(51) Int. Cl.: G02B 17/06, G02F 1/1335, G02B 17/08

(54) **DISPLAY UND RÜCKSPIEGELVORRICHTUNG FÜR EIN KRAFTFAHRZEUG UND KRAFTFAHRZEUG HIERMIT**
DISPLAY AND REARVIEW DEVICE FOR A MOTOR VEHICLE AND MOTOR VEHICLE HAVING SAME
ÉCRAN ET DISPOSITIF DE RÉTROVISEUR POUR UN VÉHICULE AUTOMOBILE ET VÉHICULE AUTOMOBILE EN ÉTANT ÉQUIPÉ

(30) Priorität: 22.04.2016 DE 102016107472
(43) Veröffentlichungstag der Anmeldung: 01.11.2017
(73) Patentinhaber: Carl Zeiss Jena GmbH, 07745 Jena (DE)
(72) Erfinder: CORRENS, Nico, 99425 Weimar (DE); DOBSCHAL, Hans-Jürgen, 99510 Kleinromstedt (DE); LÜHRS, Hendrik, 99425 Weimar (DE)
(74) Vertreter: Patentanwälte Geyer, Fehners & Partner mbB

(56) Entgegenhaltungen:
- GB-A- 2 358 980
- JP-A- 2014 164 196
- US-A1- 2002 089 467
- US-A1- 2012 200 810
- US-A1- 2015 049 390

## Beschreibung

Die Erfindung betrifft eine Rückspiegelvorrichtung für ein Kraftfahrzeug.

In Kraftfahrzeugen werden herkömmliche Armaturen mehr und mehr durch Displays ersetzt. Sie werden hinsichtlich Kontrast und Lichtstärke fortwährend optimiert. Es besteht jedoch weiterer Optimierungsbedarf.

Bei Kraftfahrzeugen sind in der Regel Außenspiegel und Innenspiegel vorgesehen, welche einem Fahrer des Kraftfahrzeugs ein Bild des Rückraums darstellen, so dass der Fahrer Informationen über den Rückraum des Fahrzeugs erhält, ohne seinen Kopf drehen zu müssen. Die Größe des dargestellten Ausschnittes des Bilds des Rückraums hängt dabei von der Größe der Spiegelfläche des Innen- oder Außenspiegels ab. Je größer die Spiegelfläche ist, desto größer ist der dem Fahrer dargestellte Ausschnitt des Rückraums. Außenspiegel, insbesondere große Außenspiegel, tragen jedoch zu einem Strömungswiderstand des Fahrzeuges bei, so dass die Größe des Rückspiegels nicht beliebig vergrößert werden kann, ohne dass sich strömungstechnische Nachteile ergeben.

Die US 4989964 A offenbart einen Rückspiegel für ein Fahrzeug, der in Art einer Fresnel-Struktur durch streifenförmige Spiegelelemente aufgebaut ist. Auf diese Weise kann der Querschnitt des Rückspiegels verkleinert werden.

Die DE 102005035550 A1 offenbart ein breitbandiges diffraktives optisches Element.

Die US 2009/00969 offenbart einen Innenrückspiegel, in den von der Rückseite Bildinformation eingeblendet werden kann.

Die US 4630905 A offenbart einen segmentierten Rückspiegel.

Die US 2003/0117731 A1 offenbart einen Compositespiegel, der eine Hauptspiegelfläche sowie eine unter einem anderen Winkel abbildende Nebenspiegelfläche hat.

Die JP 2014-164196 A offenbart eine Kamera und eine Anzeigeeinrichtung zur 3D-Darstellung.

Die US 2015/049390 offenbart ein Display. Es hat eine Anzeigeeinrichtung, der ein Mikrolinsenarray und eine Feldlinse vorgeordnet sind. Sie bilden zusammen das durch die Anzeigeeinrichtung erzeugte Bild nach Unendlich ab.

Der Erfindung liegt die Aufgabe zugrunde, eine verbesserte Rückspiegelvorrichtung bereitzustellen.

Die Erfindung ist in den unabhängigen Ansprüchen definiert. Die abhängigen Ansprüche beschreiben bevorzugte Ausführungsformen der Erfindung.

Die Erfindung umfasst ein Display für ein Kraftfahrzeug, welches eine Anzeigeeinrichtung zur Erzeugung eines Bilds und eine Mikrooptik hat, welche das durch die Anzeigeeinrichtung erzeugte Bild auf Unendlich fokussiert.

Das Display ist als Rückspiegel eines Kraftfahrzeugs vorgesehen.

Vorteil dieses Display ist es, dass der Fahrer zum Betrachten des Bilds nicht umfokussieren muss, wenn er zuvor auf die Straße geblickt hat. Gleiches gilt beim Betrachten des Rückraums des Autos, wenn das Display mit einem Rückspiegel kombiniert ist. Das Auge des Fahrers muss nicht akkommodieren, da die Mikrooptik den Strahlengang der Anzeigeeinrichtung derart verändert, dass das Auge das Bild im Unendlichen sieht. Die Mikrooptik kann insbesondere so ausgebildet sein, wie unten erläutert.

Der Begriff "unendlich" ist, wie bei der Entwicklung optischer Geräte, die von Menschen benutzt werden, üblich, auf das entsprechend akkommodierte Auge bezogen. Er umfasst also einen Bereich ab 2,6 m, insbesondere einen Bereich ab 4 m, wie er bei der augenärztlichen Prüfung der Fernsicht verwendet wird.

Die Akkommodationsdauer des Menschen bei der Umstellung von Fernsicht auf Nahsicht beträgt etwa 0,5 bis 1,5 Sekunden, in der umgekehrten Richtung etwa 0,8 bis 1,3 Sekunden. Bei Ermüdung oder im Alter können sich diese Zeitspannen zum Teil erheblich verlängern. Darüber hinaus nimmt die Akkommodationsfähigkeit mit dem Alter ab. Man bezeichnet die dadurch einhergehenden Seheinschränkungen als Presbyopie. Die Verwendung von Displays, insbesondere als Ersatz für konventionelle Anzeigen im Kraftfahrzeug, hat deshalb Grenzen hinsichtlich der Details, die ein Benutzer wahrnehmen kann. Diese Grenzen sind gerade für ältere Benutzer nicht durch die Qualität der Displays gesetzt, sondern durch die Akkommodationsfähigkeit in die Nähe. Zudem muss ein Fahrer, wenn er eine Anzeige betrachten will, vom fernakkommodierten Auge, mit dem er den Straßenverkehr beobachtete, auf Nahakkommodation umstellen und, wenn die Anzeige betrachtet wurde, wieder auf Fernakkommodation zurück. Während der entsprechenden Umstellungsdauern kann er keine der beiden Szenen, weder die Fernsicht, noch die Nahsicht, gut sehen. Das Display schafft hier Abhilfe, da es das Bild ins Unendliche abbildet. Ein Akkommodieren ist damit nicht nötig. Man kann mit dem fernakkommodierten Auge gleichzeitig auch die Anzeigen erfassen.

Im Display befinden sich größere Linsen im vergleichsweise größeren Abstand vor dem Display. Auf dem Display werden mehrere, lateral nebeneinanderliegende Bilder dargestellt. Jede Linse ist einem vollständigem Bild zugeordnet und bildet dessen volle Bildfeldgröße ab.

Hierfür ist es vorteilhaft, die optischen Achsen der Mikrolinsen parallel zueinander anzuordnen und die optischen Achsen zu einer Eyebox auszurichten, die durch den Fahrer und der räumlichen Lage seiner Augen auszurichten. Bevorzugt ist es natürlich, die Mikrolinsen zu einem einzigen Bauteil zusammenzufassen. Eine mehrteilige Bauweise ist jedoch möglich.

Das Display kann als Außenspiegel verwendet sein, jedoch auch grundsätzlich als Innenspiegel vorgesehen sein.

Es ist bevorzugt, dass die Rückspiegelvorrichtung zum Einbau in eine Fahrzeugtür ausgebildet ist.

Die Erfindung betrifft ferner ein Kraftfahrzeug, welches eine Rückspiegelvorrichtung, wie oben beschrieben, umfasst, wobei die Rückspiegelvorrichtung als Innen- oder Außenspiegel ausgebildet ist.

Das Kraftfahrzeug kann ein Personenkraftwagen, ein Lastkraftwagen oder ein motorisiertes Zweirad sein. Insbesondere soll unter dem Begriff Kraftfahrzeug jedes Fahrzeug verstanden werden, das von einem Fahrer gesteuert werden kann.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine schematische Darstellung einer ersten Rückspiegeleinrichtung;
- Fig. 2a-e: Darstellungen eines Display mit einer Mikrooptik;
- Fig. 3: eine weitere Ausführungsform der Mikrooptik der Rückspiegeleinrichtung gemäß Fig. 1;
- Fig. 4: eine schematische Darstellung einer zweiten Rückspiegelvorrichtung;
- Fig. 5: eine exemplarische Darstellung des Strahlungsverlaufs der zweiten Rückspiegelvorrichtung gemäß der ;
- Fig. 6: eine schematische Darstellung einer dritten Rückspiegelvorrichtung;
- Fig. 7: eine exemplarische Darstellung des Strahlungsverlaufs der dritten Rückspiegelvorrichtung;
- Fig. 8: eine schematische Darstellung einer vierten Rückspiegelvorrichtung; und
- Fig. 9: eine schematische Darstellung einer fünften Rückspiegelvorrichtung.

Eine erste Rückspiegelvorrichtung 10 umfasst ein Rückspiegelelement 12, sowie optional eine Verdunklungseinrichtung 14, eine Heizung 16, eine Anzeigeeinrichtung 18 und eine Mikrooptik 20.

Die Rückspiegelvorrichtung 10 ist an einer Außenseite eines Kraftfahrzeugs 22, insbesondere an einer Fahrzeugtür, vorgesehen. Das Rückspiegelelement 12 definiert eine Grundstruktur, welche eine Referenzebene 24 festlegt. Die Referenzebene 24 ist parallel zu einer Oberfläche der Rückspiegelvorrichtung 10, welche einer Rückraumstrahlung 26, die aus einem Rückraum des Kraftfahrzeugs 22 einfallende Strahlung, zugewandt ist. Die Rückraumstrahlung 26 fällt mit einem Einfallswinkel γ₁ gegenüber einer Normalen der Referenzebene 24 ein. Das Rückspiegelelement 12 lenkt die Rückraumstrahlung 26 derart ab, dass ein Ausfallswinkel γ₂ kleiner als ein Einfallswinkel γ₁.

Die Rückspiegelvorrichtung 10 ist gegenüber dem Kraftfahrzeug 22 unter einem Außenwinkel α angeordnet, welcher z. B. ungefähr 30° ist. Ein herkömmlicher Außenspiegel 28 schließt einen Außenwinkel β gegenüber dem Kraftfahrzeug 22 ein, welcher zwischen 90 und 60° liegt. Die in das Innere des Kraftfahrzeugs 22 reflektierte Strahlung ist jedoch für die Rückspiegelvorrichtung 10 wie bei einem herkömmlichen Spiegel 28, insbesondere ist die Flächenausdehnung des Rückspiegelelements 12 und der Spiegelfläche des herkömmlichen Außenspiegels 28 gleich. Dies gelingt, da der Einfallswinkel γ₁ größer als der Ausfallswinkel γ₂.

Dadurch ist die für den Strömungswiderstand wirksame Fläche d der Rückspiegelvorrichtung 10 kleiner als beim herkömmlichen Spiegel 28.

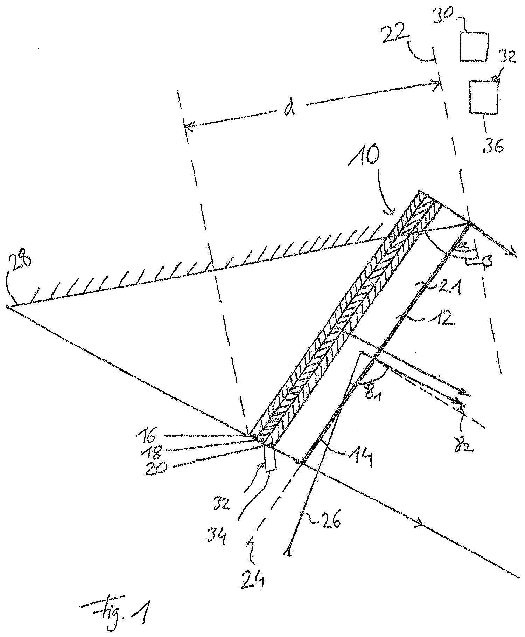

Das Rückspiegelelement 12 weist gemäß Fig. 1 mehrere parallel zu der Referenzebene 24 übereinander angeordnete Beugungsgitter auf, welche in Fig. 1 nicht dargestellt sind, und die Rückraumstrahlung 26 in unterschiedlichen Wellenlängenbereichen in die erste Beugungsordnung reflektierend beugen. Die Beugungsgitter beugen den größten Teil der Rückraumstrahlung in die erste Beugungsordnung. Die Beugungsgitter sind ferner nur den jeweiligen Wellenlängenbereich reflektierend und für alle anderen Wellenlängenbereiche transmittierend oder haben eine erste Beugungsordnung mit starker Wellenlängenabhängigkeit. Dadurch ist erreicht, dass die Rückraumstrahlung 26 für jeden Wellenlängenbereich unter dem gleichen Ausfallswinkel γ₂ reflektiert wird. Alternativ ist nur ein Beugungsgitter vorhanden, das ein weitgehend monochromes Bild erzeugt.

Auf der der Rückraumstrahlung 26 abgewandten Seite des Rückspiegelelements 12 ist die Anzeigeeinrichtung 18 vorgesehen, welche als Display ausgebildet ist. Die Anzeigeeinrichtung 18 wird durch die optionale Heizung 16 bei kalten Außentemperaturen erwärmt und dient zur Erzeugung eines Zusatzbilds. Die von der Anzeigeeinrichtung 18 erzeugte Strahlung wird durch die Mikrooptik 20, welche zwischen der Anzeigeeinrichtung 18 und dem Rückspiegelelement 12 angeordnet ist, derart fokussiert, dass deren Strahlung nach der Mikrooptik 20 parallel oder annähernd parallel verläuft. Da auch die Rückraumstrahlung 26 nahezu parallel ist, muss der Fahrer zum Betrachten des Rückraums und zum Betrachten des Zusatzbilds das Auge nicht unterschiedlich akkommodieren. Der Aufbau der Mikrooptik 20 wird im Folgenden beschrieben. Das Rückspiegelelement 12 wirkt als Einkopplungseinrichtung 21 für das Zusatzbild. Die Einkopplungseinrichtung 21 koppelt die Strahlung von der Anzeigeeinrichtung 18 in den Strahlengang der reflektierten Strahlung ein.

Auf der der Rückraumstrahlung 26 zugewandten Seite des Rückspiegelelements 12 ist die optionale Verdunklungseinrichtung 14 angeordnet, welche ausgebildet ist, die von dem Rückspiegelelement 12 reflektierte Strahlung bereichsweise wenigstens teilweise zu absorbieren. Die Verdunklungseinrichtung 14 ist z. B. als elektrochrome Schicht ausgebildet, welche durch eine Steuereinrichtung 30, die im Inneren des Kraftfahrzeugs 22 angeordnet ist, steuerbar ist.

Die Rückspiegelvorrichtung 10 weist ferner eine optionale Erfassungseinrichtung 32 auf, welche eine Kamera 34 und eine Augenpositionserfassungseinrichtung 36 umfasst. Die Kamera 34 ist an dem Rückspiegelelement 12 vorgesehen und dient zur Erfassung der Rückraumstrahlung 26, insbesondere des Bereichs des Rückraums, welcher durch das Rückspiegelelement 12 in das Innere des Kraftfahrzeugs 22 gelenkt wird. Die Steuereinrichtung 30 ist mit der Erfassungseinrichtung 32 verbunden und kann mittels der Kamera 34 eine Lichtquelle im Rückraum des Kraftfahrzeugs 22 bestimmen.

Die Augenpositionserfassungseinrichtung 36 ist z. B. im Inneren des Kraftfahrzeugs 22 angeordnet und als Kamera ausgebildet. Mittels der Augenpositionserfassungseinrichtung 36 können die Position und die Blickrichtung eines Fahrers des Kraftfahrzeugs 22 erfasst werden. Anhand der Bestimmung einer Lichtquelle im Rückraum mittels der Kamera 34 und der erfassten Blickrichtung des Fahrers kann die Steuereinrichtung 30 selektiv die Verdunklungseinrichtung 14 derart ansteuern, dass die aus dem Rückraum von der Lichtquelle einfallende Rückraumstrahlung 26 so verdunkelt wird, dass der Fahrer nicht geblendet wird.

Das Rückspiegelelement 12 kann wie ein herkömmlicher Außenspiegel 28 verstellt werden. Beispielsweise kann das Rückspiegelelement 12 manuell oder mit Hilfe eines Motors verstellt werden.

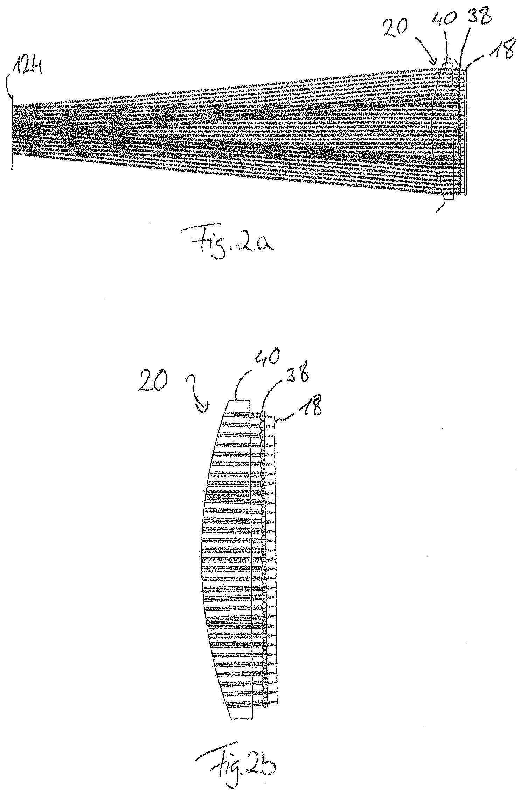

Eine Ausführungsform einer Mikrooptik 20 ist in den Fig. 2a und 2b dargestellt. Die Mikrooptik 20 weist ein Mikrolinsenarray 38 und eine optionale Feldlinse 40 auf. Das Mikrolinsenarray 38 ist der Anzeigeeinrichtung 18 nachangeordnet. Die Mikrooptik 20 erzeugt annähernd parallele Strahlung aus der von der Anzeigeeinrichtung 18 bereitgestellten Strahlung, welche optional von der Feldlinse 40 in einem vorbestimmten Raumbereich 124 projiziert wird, wenn dies gewünscht ist. Der vorbestimmte Raumbereich 124 kann auch als Eyebox aufgefasst werden, in welchem ein Beobachter das von der Anzeigeeinrichtung 18 dargestellte Bild ohne starke Akkommodation des Auges betrachten kann. Die Mikrooptik 20 bildet das Bild der Anzeigeeinrichtung 18 derart ab, dass ein Beobachter das Bild der Anzeigeeinrichtung 18 (ggf. im vorgegebenen Raumbereich 124) mit einem Abstand von beispielsweise 1,7 m wahrnimmt. Die Größe des vorgegebenen Raumbereichs 124 entspricht zu einem Drittel bis zu einem Viertel der Abmessung der Anzeigeeinrichtung 18. Das Mikrolinsenarray 38 weist, wie dies insbesondere in Fig. 2b ersichtlich ist, eine Vielzahl von Mikrolinsen auf, welche das von der Anzeigeeinrichtung 18 emittierte Licht parallelisiert.. Die Feldlinse 40 und/oder das Mikrolinsenarray 38 können aus Polymethylmethacrylat (PMMA) hergestellt sein.

Die Ausführungsformen der Fig. 2a und 2b stellen Display als Ersatz für den Rückspiegel bereit. Sie können weiter als Display in einem Kraftfahrzeug, insbesondere in folgender Funktion eingesetzt werden:
1. Instrumentenkombination statt klassischen Zeigerinstrumenten; üblicherweise hinter dem Lenkrad in einem Abstand bezogen auf den Augpunkt des Fahrers von 80 bis 90 cm;
2. Zentraldisplay; üblicherweise innerhalb oder oberhalb der Mittelkonsole des Kraftfahrzeuges in einem Abstand von 90 bis 110 cm;
3. sonstiges Display in der Mittelkonsole, z.B. zur Klima- oder Infotainmentbedienung;
4. Display für den Beifahrer in der Armaturentafel oder die anderen Passagiere, z.B. auf der Rückseite der Vordersitzlehnen; der Abstand liegt dann zwischen 35 und 90 cm;
5. Display auf Höhe der Frontscheibenwurzel oder der kurz hinter der Frontscheibe als Ersatz für Instrumentenkombination und/oder Zentral- und/oder Beifahrerdisplay; je nach Fahrzeuggeometrie liegt der Abstand zwischen 100 und 120 cm;
6. Display als Ersatz für den Rückspiegel; beim Außenspiegel ein Abstand von etwa 60 cm, beim Innenspiegle ein Abstand von etwa 35 cm;
7. Display für Bedienung der Beleuchtung, die normalerweise in der Armaturentafel zwischen Lenkrad und Fahrertür bedient wird, im Dachhimmel oberhalb des Innenrückspiegels, beispielsweise zur Bedienung des Schiebedachs, in den Türtafeln, beispielsweise zur Bedienung von Fensterhebern, oder zur Bedienung diverser Infotainmenteinrichtungen.

Die Größe des Displays variiert. Bei den Verwendungen Nummer 1 oder 2 beträgt sie z.B. etwa 20 cm x 8 cm bis 30 cm x 11 cm. Beim Einsatz in der Instrumentenkombination ist platzbedingt relativ wenig Spielraum gegeben, bei der Verwendung als Zentraldisplay können Displays auch erheblich größer werden und andere Displays ersetzen. Bei der Verwendung auf Höhe der Frontscheibenwurzel hängen die Größe des Displays und der Formfaktor stark von der Interieurgestaltung des Fahrzeugs ab. Als Beifahrerdisplay sind flache und dafür breite Displays in der Armaturentafel zu bevorzugen, wohingegen an der Rückseite von Vordersitzlehnen angebrachte Displays meist Formfaktoren oder Bildschirmdiagonalen ähnlich der üblicher Tablet-Computer haben. Ein in Richtung der Frontscheibe gerücktes Display sollte aufgrund der größeren Entfernung zum Augpunkt tendenziell entsprechend größer sein. Als Ersatz für den Rückspiegel hat das Display üblicherweise die Abmessungen des herkömmlichen Rückspiegels.

Das Linsenarray, welches vor der Anzeigeeinrichtung 18 sitzt hat naturgemäß eine darauf angepasste Größe. Es kann durch direktes Elektronenstrahl- oder Laserstrukturierungsverfahren hergestellt werden. Eine andere kostengünstige Herstellmethode ist das Rundschmelzen von strukturierten Positivresists und die anschließende UV-Abformung der erzeugten 3D-Strukturen. Mit solchen Werkzeugvorlagen könne anschließend durch Drucken, Heißprägen oder Spritzgießen die Serienoptiken der Mikrolinsenarrays 38 gefertigt werden. Eine derartige Fertigung ist dem Fachmann bekannt.

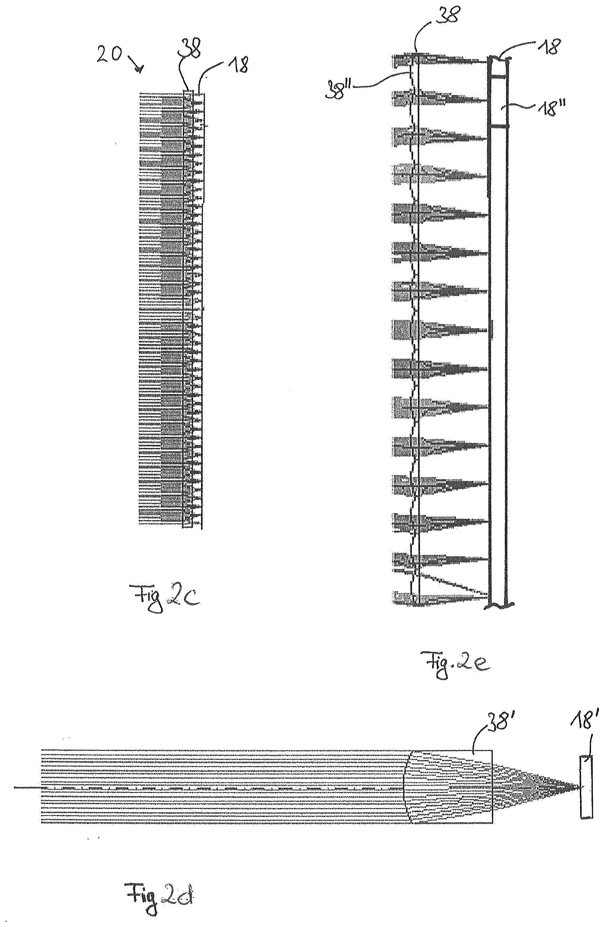

Eine nicht die Erfindung realisierende Bauweise des Displays ist in den Fig. 2c und 2d gezeigt. Fig. 2c zeigt die Mikrooptik 20 in einer derartigen Ausgestaltung, dass der Anzeige einer Richtung 18 in Beobachtungsrichtung ausschließlich das Mikrolinsenarray 38 nachgeordnet ist. Fig. 2c zeigt exemplarisch die Zusammenwirkung eines Pixels 18' der Anzeigeeinrichtung 18 mit einer Mikrolinse 38` des Mikrolinsenarrays 38. Bei einem Beobachtungsabstand von 60 cm und dem Durchmesser der Eyebox von 80 mm beträgt die Brennweite jeder Mikrolinse 38` beispielsweise 0,83 mm. Insgesamt ist ein Brennweitenwert zwischen 1 mm und 0,6 mm bevorzugt. Das Rastermaß des Mikrolinsenarrays 38 und damit in der Regel der Durchmesser einer einzelnen Mikrolinse 38` beträgt in der dargestellten Ausführungsform 0,4 mm. Insgesamt ist ein Rastermaß zwischen 0,2 mm und 0,8 mm bevorzugt. Der Abstand der Mikrolinsen 38' von den Pixeln 18' in axialer Richtung beträgt in der dargestellten Ausführungsform 0,5 mm. Ein Abstandsmaß zwischen 0,3 mm und 0,7 mm ist bevorzugt. Auch ist in der Darstellung der Fig. 2d die der Anzeigeneinrichtung 38 zugeordnete Seite des Mikrolinsenarrays 38 bzw. der Mikrolinsen 38` plan. Dies erleichtert die Fertigbarkeit. In der Bauweise der Fig. 2c und 2d befindet sich vor jedem Pixel der Anzeigeeinrichtung 18 genau eine Mikrolinse 18`. Die Größe der Mikrolinsen 38` legt die Auflösung dar, mit welcher das im Unendlichen betrachtbare Bild wahrgenommen werden kann. Da es günstig ist, optische Systeme, die von Benutzern betrachtet werden, mit einer Auflösung von ca. einer Winkelminute auszugestalten, kann es bei hochauflösenden Anzeigeeinrichtungen 18 möglicherweise zweckmäßig sein, mehrere Pixel 18' zusammenzufassen und für diese Gruppe eine Mikrolinse 38' im Mikrolinsenarray 38 vorzusehen. Man nimmt damit ein entsprechendes Pixelbinning in der Anzeigeeinrichtung 18 vor.

Die optischen Achsen der Mikrolinsen 38' sind, wie in Fig. 2d dargestellt, vorzugsweise rechtwinklig zur Oberfläche der Anzeigeeinrichtung 18 ausgerichtet. Es kann in Ausführungsformen aber auch sinnvoll sein, die optischen Achsen unterschiedlich auszurichten oder kollektiv schräg zu stellen, beispielsweise, wenn die Eyebox schräg zur Oberfläche der Anzeigeeinrichtung 18 liegt. Bevorzugt werden alle Mikrolinsen 38' in einem einteiligen Mikrolinsenarray 38 zusammengefasst. Eine Aufteilung kann jedoch unter Umständen einfacher zu Fertigen sein. In der Option, welche die Fig. 2c und 2d betreffen, wird an der Anzeigeneinrichtung 18 ein Bild dargestellt, und die Ortsauflösung für das Bild ist durch die Feinheit des Mikrolinsenarrays 38 bestimmt.

In der Ausführungsform der Erfindung, die in Fig. 2e schematisch gezeigt ist, befinden sich größere Linsen in größeren Abständen vor der Anzeigeeinrichtung 18. Auf ihr werden mehrere Bilder dargestellt, d.h. es gibt mehrere Bildbereiche 18", und jede Linse 38" bildet die volle Bildfeldgröße eines entsprechenden Bildes ab, das von einem Bildbereich 18" bereitgestellt wird. Um einen möglichst hohen Füllfaktor zu erreichen, können die Linsen 38" bevorzugt als Rechtecke oder Bienenwaben ausgebildet und angeordnet werden. Sie können jeweils gleiche, aber auch verschiedene Größen haben, wobei die optischen Eigenschaften jeweils gleich sind, was die Abbildungseigenschaften angeht. Die Größe ist an die Größe des Bildbereichs 18" angepasst. Es ist auch möglich, die einzelnen Linsen 38" als Fresnelsche Stufenlinsen zu gestalten. Hinsichtlich der optischen Achsen gilt das zu den Bauweisen der Fig. 2c und 2d gesagte sinngemäß. Ebenso hinsichtlich einer einteiligen oder mehrteiligen Bauweise. Bei einem Betrachtungsabstand von 60 cm und einer Eyebox von 80 mm Durchmesser ergeben sich bei einer Array- bzw. Displaygröße von 150 mm für eine Ausführungsform eine Rasterteilung von 10 mm und ein entsprechender Linsendurchmesser von 10 mm. Der Abstand zwischen Mikrolinsenarray 38 und Anzeigeeinrichtung 18 beträgt dann 20 mm. Die Pixelgröße in den Bildbereichen 18' ist bevorzugt 6 µm, höchstens aber 10 µm. Dies hängt von der geforderten Auflösung ab, die optional eine Winkelminute beträgt. Die einzelnen Linsen 38' sind wiederum plankonvexe Linsen und haben eine Brennweite von 21,3 mm, wobei Werte zwischen 18 und 25 mm bevorzugt sind.

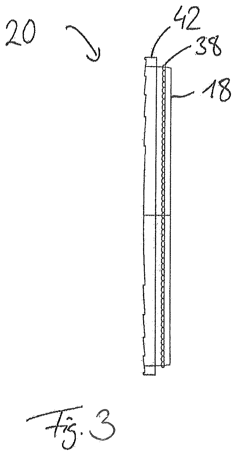

Bei der in Fig. 3 gezeigten Ausführungsform der Mikrooptik 20 ist die Feldlinse 40 eine Fresnel-Linse 42. Die Fresnel-Linse 42 kann ebenfalls aus PMMA hergestellt sein. Die Fresnel-Linse 42 weist eine Dicke von 5 mm auf, wobei die Tiefe der Fresnel-Zacken 0,3 mm ist. Ein Koeffizient C2 der Fresnel-Linse 42, d. h. ein Koeffizient von einem quadratischen Term, beträgt 0,002; alle höheren Koeffizienten sind gleich 0. Die Fresnel-Linse 42 erfüllt den gleichen Zweck wie die Feldlinse 40.

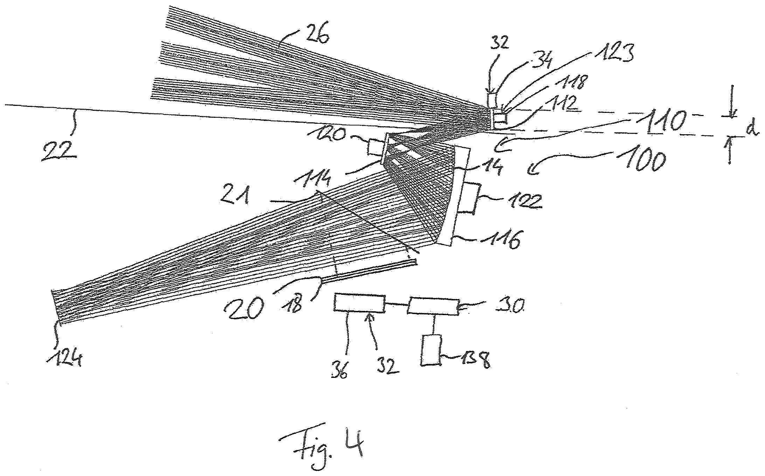

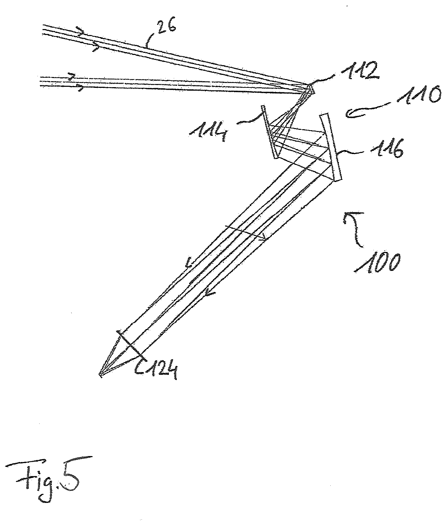

Eine andere Rückspiegelvorrichtung 100 ist in Fig. 4 und 5 dargestellt. Die Rückspiegelvorrichtung 100 weist ein Optikmodul 110 auf, welches ein erstes optisches Element 112, ein optisches Zwischenelement 114 und ein zweites optisches Element 116 umfasst. Das erste optische Element 112 ist als ein Spiegelelement, insbesondere als Hohlspiegel, ausgebildet. Der Hohlspiegel ist in zwei zueinander senkrechten Richtungen gekrümmt. Das erste optische Element 112 ist an einer Außenseite des Kraftfahrzeugs 22 im Bereich des herkömmlichen Außenspiegels 28 angeordnet. Das erste optische Element 112 ist in seiner Ausrichtung verstellbar, z. B. mittels eines ersten Motors 118. Das optische Zwischenelement 114 ist als ein Zwischenspiegelelement, insbesondere als Feldspiegel, ausgebildet, welcher an einer Innenseite des Kraftfahrzeugs 22 angeordnet ist. Das optische Zwischenelement 114 ist in seiner Ausrichtung verstellbar, z. B. mittels eines zweiten Motors 120. Das zweite optische Element 116 ist als Hohlspiegel ausgebildet und an einem Armaturenbrett des Kraftfahrzeugs 22 oder an der Türinnenseite angeordnet. Der Hohlspiegel ist ebenfalls in zwei zueinander senkrechten Richtungen gekrümmt. Die Ausrichtung des zweiten optischen Elements 116 lässt sich verstellen, z. B. mit Hilfe eines dritten Motors 122. Das erste optische Element 112 und das zweite optische Element 116 sind als Freispiegel ausgebildet.

Der erste Motor 118, der zweite Motor 120 und der dritte Motor 122 bilden ein Beispiel für eine Verstelleinrichtung 123 und sind als elektrischen Motoren, z. B. als Piezomotoren, ausgebildet. Alternativ wäre auch eine manuelle Verstellmechanik möglich. Der erste Motor 118, der zweite Motor 120 und der dritte Motor 122 werden von der Steuereinrichtung 30 gesteuert. So kann ein Fahrer des Kraftfahrzeugs 22 das Optikmodul 110 mittels einer Eingabeeinrichtung 138 verstellen. Durch Betätigung der Eingabeeinrichtung 138 wir von der Steuereinrichtung 30 die Ausrichtung des ersten optischen Elements 112, des zweiten optischen Elements 114 und/oder des dritten optischen Elements 116 verändert.

Das Optikmodul 110 ist ausgebildet, Rückraumstrahlung 26 in den vorbestimmten Raumbereich 124, welcher auch als Eyebox bezeichnet wird, derart zu projizieren, dass in dem vorbestimmten Raumbereich 124 ein virtuelles Bild des Rückraums vorhanden ist. Somit kann ein Fahrer, der sein Auge im vorbestimmten Raumbereich 124 hat, den Rückraum wie in einem Spiegel beobachten.

Das Optikmodul 110, insbesondere das erste optische Element 112, das optische Zwischenelement 114 und das zweite optische Element 116, sind derart angeordnet, dass die Rückraumstrahlung 26 aufgefächert wird. Dies geschieht dadurch, dass das erste optische Element 112 näher an dem Fokus des ersten optischen Elements 112 angeordnet ist als das zweite optische Element 116. Daher kann die Größe der spiegelnden Fläche des ersten optischen Elements 112 kleiner als ein herkömmlicher Spiegel sein, so dass die für den Strömungswiderstand wirksame Fläche d geringer als bei einem herkömmlichen Außenspiegel 28 ist. Beispielsweise hat der Hohlspiegel des ersten optischen Elements 112 einen Durchmesser von 30 mm. Der Faktor der Aufweitung beträgt beispielsweise 0,3. Wie dies schematisch in Fig. 5 dargestellt wird, wird der Rückraum dem Fahrer seitenverkehrt, also gespiegelt abgebildet, wobei ein reelles Zwischenbild in dem Optikmodul 110 an der Position des Brennpunkts des ersten optischen Elements 112 entsteht.

Durch die Aufweitung der Rückraumstrahlung 26 mittels des Optikmoduls 110 kann das erste optische Element 112 im Vergleich zu einem herkömmlichen Außenspiegel 28 kleiner ausgestaltet sein, so dass der Strömungswiderstand der Rückspiegelvorrichtung 100 im Vergleich zu einem herkömmlichen Außenspiegel 28 reduziert werden kann. Darüber hinaus hat die Rückspiegelvorrichtung 100 im Vergleich zum Vorsehen einer Rückraumkamera mit einem Bildschirm den Vorteil, dass ein Fahrer auch ohne Stromversorgung den Rückraum betrachten kann, da zur Darstellung des Rückraums das Optikmodul 110 keinen Strom benötigt wird.

Die Rückspiegelvorrichtung 100 kann, wie der Rückspiegelvorrichtung 10 eine Verdunklungseinrichtung 14, welche sich beispielsweise auf der Oberfläche des Hohlspiegels des zweiten optischen Elements 116 vorgesehen ist, und eine Erfassungsvorrichtung 32 zugeordnet sein. Die Rückspiegelvorrichtung 100 weist die Anzeigeeinrichtung 18, die Mikrooptik 20 und die Einkopplungseinrichtung 21 auf. In dieser Ausführungsform ist die Einkopplungseinrichtung 21 als Strahlteiler vorgesehen. Die Einkopplungseinrichtung 21 koppelt die von der Anzeigeeinrichtung 18 erzeugte Strahlung in den Strahlengang für das virtuelle Bild ein. Die Mikrooptik 20 fokussiert die von der Anzeigeeinrichtung 18 stammende Strahlung auf unendlich, so dass der Fahrer zum Betrachten des Rückraums und zum Betrachten der von der Anzeigeeinrichtung 18 erzeugten Bilds nicht unterschiedlich akkommodieren muss.

Die Steuereinrichtung 30 ist ausgebildet, das erste optische Element 112, das optische Zwischenelement 114 und das dritte optische Element 116 gemeinsam zu verstellen. Auf diese Weise lässt sich die Position des vorbestimmten Raumbereichs 124 verändern. Insbesondere ist die Steuereinrichtung 30 ausgebildet, nach Betätigung der Eingabeeinrichtung 138 das erste optische Element 112, das optische Zwischenelement 114 und das zweite optische Element 116 derart zu verstellen, dass sich der vorbestimmte Raumbereich 124 an einer zuvor festgelegten Position befindet. Diese Position ist an die erwartete Augenposition eines normalgroßen Fahrers angepasst. Ferner ist die Steuereinrichtung 30 ausgebildet, das erste optische Element 112, das optische Zwischenelement 114 und das zweite optische Element 116 relativ zueinander zu verstellen. Auf diese Weise lässt sich der Ausschnitt der Darstellung des Rückraums variieren, so dass dem Fahrer unterschiedliche Ausschnitte des Rückraums dargestellt werden können.

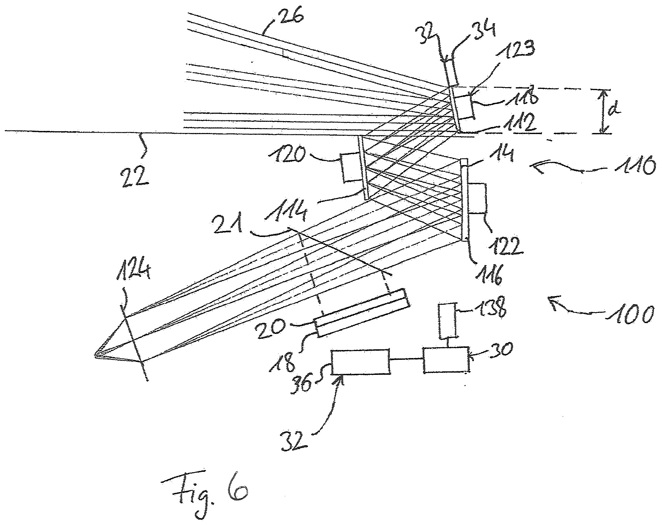

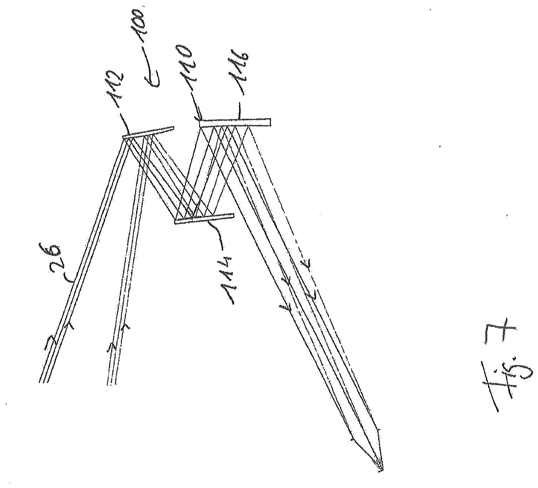

Eine weitere Rückspiegelvorrichtung 100 ist in Fig. 6 und 7 dargestellt. Sie unterscheidet sich von der in den Fig. 4 und 5 dargestellten Rückspiegelvorrichtung 100 durch die Ausgestaltung des ersten optischen Elements 112 und des optischen Zwischenelements 114. Daher wird im Folgenden nur auf diese Unterschiede eingegangen. Das erste optische Element 112 ist als ein in zwei zueinander senkrechten Richtungen gekrümmter Wölbspiegel, insbesondere als Freiformspiegel ausgebildet. Das optische Zwischenelement 114 ist als ein zylindrisch geformter Wölbspiegel, insbesondere als Freiformspiegel, ausgebildet, welcher in nur eine Richtung gekrümmt ist. Somit projiziert das Optikmodul 110 die Rückraumstrahlung 26 in den vorbestimmten Raumbereich 124, ohne ein reelles Zwischenbild zu erzeugen. Wie dies insbesondere in Fig. 7 dargestellt ist, korrespondiert die Richtung der Rückraumstrahlung 26 mit der auf dem Auge einfallenden Position, so dass dem Fahrer der Rückraum nicht spiegelverkehrt angezeigt wird. Auch bei Fig. 6 und 7 wird in den vorbestimmten Raumbereich 124 ein virtuelles Bild projiziert; die in den vorbestimmten Raumbereich 124 einfallende Strahlung ist parallel. Mittels des Optikmoduls 110 kann Rückraumstrahlung 26 in einen Winkelbereich von 14° horizontal und 12° vertikal erfasst werden. Die Aufweitung der Rückraumstrahlung 26 führt zu einem Vergrößerungsfaktor von 0,31. Auch hier sind eine Erfassungseinrichtung 32, eine Eingabeeinrichtung 138, die Anzeigeeinrichtung 18, die Mikrooptik 20 und die Einkopplungseinrichtung 21 vorgesehen, welche analog wie zuvor beschrieben ausgestaltet sind.

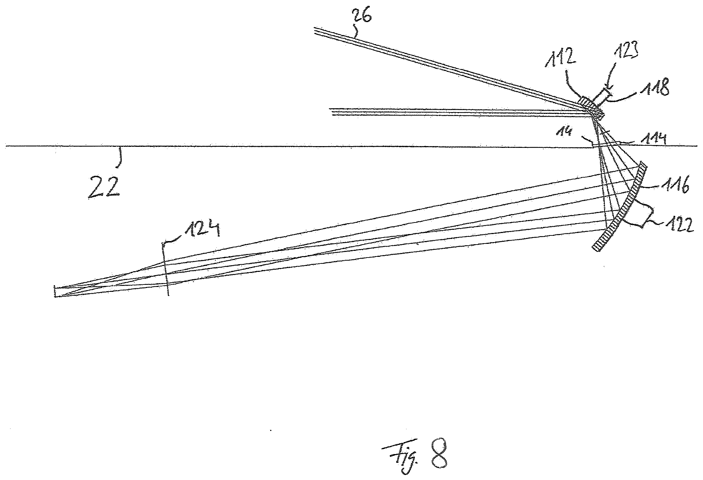

Eine weitere Rückspiegelvorrichtung 100, wie in Fig. 8 gezeigt ist, stimmt mit der in Fig. 4 und 5 gezeigten Rückspiegelvorrichtung 100 überein bis auf die Ausgestaltung des optischen Zwischenelements 114. Deshalb wird im Folgenden nur auf diesen Unterschied eingegangen. Das optische Zwischenelement 114 ist als ein Linsenelement, insbesondere als konkave Linse, ausgestaltet. Das Linsenelement übernimmt die gleiche Funktion wie der Hohlspiegel in Fig. 6 und 7, divergiert nämlich die einfallende Strahlung, so dass eine größere Aufweitung der Rückraumstrahlung 26 erreicht werden kann. Das optische Zwischenelement 114 ist transmissiv und in einer Fahrzeugtür des Kraftfahrzeugs 22 angeordnet. In dieser Ausführungsform der Rückspiegelvorrichtung 100 weist das optische Zwischenelement 114 keinen Motor zum Verstellen der Position auf, sondern ist fest angeordnet. Auch in dieser Ausführungsform kann eine Erfassungseinrichtung 32, eine Eingabeeinrichtung 138, eine Anzeigeeinrichtung 18, eine Mikrooptik 20 und eine Einkopplungseinrichtung 21 vorgesehen sein, welche aus Gründen der Übersichtlichkeit in den Fig. 8 nicht eingezeichnet sind. Die als elektrochrome Schicht ausgebildete, optionale Verdunklungseinrichtung 14 ist auf einer Oberfläche des optischen Zwischenelements 114 vorgesehen.

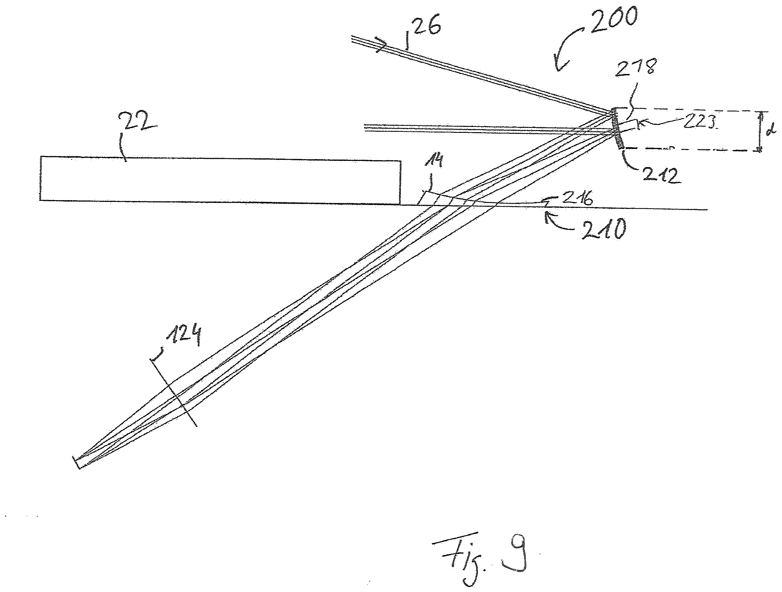

Eine in Fig. 9 dargestellte Rückspiegelvorrichtung 200 weist ein Optikmodul 210 auf. Das Optikmodul 210 hat ein erstes optisches Element 112, das als Wölbspiegel ausgebildet ist, und ein zweites optisches Element 216, das als konkave Linse ausgebildet ist. Das zweite optische Element 216 weist insbesondere eine Freiformfläche auf, kann aber jedoch auch als diffraktes optisches Element oder Fresnel-Linse ausgebildet sein. Das zweite optische Element 216 ist fest in einer Fahrzeugtüre des Kraftfahrzeugs 22 angeordnet. Dem ersten optischen Element 212 ist als Verstelleinrichtung 223 ein erster Motor 218 beigeordnet, mittels welchem die Ausrichtung des ersten optischen Elements 112 verstellt werden kann. Die Rückraumstrahlung 26 wird durch das erste optische Element 212 divergierend reflektiert und durch das zweite optische Element 216 fokussiert, so dass die in dem vorbestimmten Raumbereich 124 eintreffende Strahlung parallel ist. Das Optikmodul 210 weitet somit ebenfalls wie die zuvor beschriebenen Rückspiegelvorrichtungen 100 ebenfalls die Rückraumstrahlung 26 auf. Auch hier sind die Erfassungseinrichtung 32, die Eingabeeinrichtung 138, die Anzeigeeinrichtung 18, die Mikrooptik 20 und die Einkopplungseinrichtung 21 vorgesehen, welche aus Gründen der Übersichtlichkeit in den Fig. 9 nicht eingezeichnet sind. Die als elektrochrome Schicht ausgebildete, optionale Verdunklungseinrichtung 14 ist auf einer Oberfläche des zweiten optischen Elements 216 vorgesehen.

## Patentansprüche

1. Rückspiegelvorrichtung für ein Kraftfahrzeug umfassend
eine Kamera (34) zur Erfassung eines Bildes des Rückraums und
ein Display, umfassend eine Anzeigeeinrichtung (18) zur Erzeugung eines Bilds mit einer vorgeordneten Mikrooptik, welche das durch die Anzeigeeinrichtung (18) erzeugte Bild auf Unendlich fokussiert und die als ein Mikrolinsenarray (38) mit Mikrolinsen (38") ausgebildet ist,
**dadurch gekennzeichnet, dass**
- das Display zur Verwendung als Rückspiegel des Kraftfahrzeuges ausgebildet ist,
- die Anzeigeeinrichtung (18) mehrere lateral beabstandete Bildbereiche (18") aufweist und darauf jeweils ein Bild darstellt und
- jede Mikrolinse (38") die volle Bildfeldgröße eines entsprechenden Bildes abbildet, das von jedem der Bildbereiche (18") bereitgestellt wird, so dass die Mikrooptik (20) für jedes der Bilder genau eine Mikrolinse (38") aufweist.

2. Rückspiegelvorrichtung nach Anspruch 1, wobei die Mikrolinsen (38") jeweils als Fresnelsche Stufenlinsen gestaltet sind.

3. Rückspiegelvorrichtung nach Anspruch 1 oder 2, wobei die optischen Achsen aller Mikrolinsen (38`) parallel liegen und in Richtung einer durch eine Fahrerposition definierten Eyebox ausgerichtet sind.

4. Rückspiegelvorrichtung nach Anspruch 3, wobei die Eyebox in einem Betrachtungsabstand von 60 cm liegt und 80 mm Durchmesser hat, die Anzeigeeinrichtung (18) eine Größe von 150 mm hat, das Mikrolinsenarray (38) eine Rasterteilung von 10 mm und einen Linsendurchmesser von 10 mm hat und der Abstand zwischen Mikrolinsenarray (38) und Anzeigeeinrichtung (18) 20 mm beträgt, wobei die Mikrolinse (38") plankonvexe Linsen sind und eine Brennweite zwischen 18 und 25 mm haben, bevorzugt von 21,3 mm.

5. Rückspiegelvorrichtung nach Anspruch 4, wobei eine Pixelgröße in den Bildbereichen (18") höchstens 10 µm beträgt, bevorzugt 6 µm.

6. Rückspiegelvorrichtung nach einem der obigen Ansprüche, die als Außenspiegel ausgebildet ist.

7. Rückspiegelvorrichtung nach einem der Ansprüche 1 bis 5, die als Innenspiegel ausgebildet ist.

8. Kraftfahrzeug mit einer Rückspiegelvorrichtung (10, 100, 200) nach einem der Ansprüche 1 bis 7.

## Claims

1. Rear-view mirror apparatus for a motor vehicle, comprising a camera (34) for capturing an image of the rear space and a display comprising a display device (18) for generating an image with an upstream microoptical unit, which focuses the image generated by the display device (18) to infinity and is designed as a microlens array (38) with microlenses (38"),
**characterized in that**
- the display is configured for use as a rear-view mirror of the motor vehicle,
- the display device (18) comprises a plurality of laterally spaced-apart image regions (18"), each presenting an image, and
- each microlens (38") images the full image-field size of a corresponding image provided by each of the image regions (18") in a manner such that the microoptical unit (20) comprises exactly one microlens (38") for each of the images.

2. Rear-view mirror apparatus according to Claim 1, wherein the microlenses (38") are each designed as Fresnel step lenses.

3. Rear-view mirror apparatus according to Claim 1 or 2, wherein the optical axes of all microlenses (38') are parallel and are aligned in direction of an eyebox defined by a driver position.

4. Rear-view mirror apparatus according to Claim 3, wherein the eyebox lies at a viewing distance of 60 cm and has a diameter of 80 mm, the display device (18) has a size of 150 mm, the microlens array (38) has a grid pitch of 10 mm and a lens diameter of 10 mm, and the distance between the microlens array (38) and the display device (18) is 20 mm, wherein the microlenses (38") are planoconvex lenses and have a focal length of between 18 and 25 mm, preferably 21.3 mm.

5. Rear-view mirror apparatus according to Claim 4, wherein a pixel size in the image regions (18") is at most 10 µm, preferably 6 µm.

6. Rear-view mirror apparatus according to any of the above claims, which is configured as an external mirror.

7. Rear-view mirror apparatus according to any of Claims 1 to 5, which is configured as an internal mirror.

8. Motor vehicle having a rear-view mirror apparatus (10, 100, 200) according to any of Claims 1 to 7.

## Revendications

1. Dispositif de rétroviseur pour un véhicule automobile, comprenant une caméra (34) pour acquérir une image de l'espace arrière et un écran, comprenant un dispositif d'affichage (18) pour générer une image, avec une micro-optique placée en amont qui met l'image générée par le dispositif d'affichage (18) au point sur l'infini et qui est réalisée sous la forme d'un réseau de microlentilles (38) avec des microlentilles (38"),
**caractérisé en ce que**
- l'écran est réalisé pour être utilisé comme rétroviseur du véhicule automobile,
- le dispositif d'affichage (18) présente plusieurs zones d'image (18") espacées latéralement, et représente sur celles-ci respectivement une image, et
- chaque microlentille (38") reproduit toute la grandeur de champ de vision d'une image correspondante qui est fournie par chacune des zones d'image (18") de sorte que la micro-optique (20) présente exactement une microlentille (38") pour chacune des images.

2. Dispositif de rétroviseur selon la revendication 1, dans lequel les microlentilles (38") sont respectivement configurées sous forme de lentilles de Fresnel.

3. Dispositif de rétroviseur selon la revendication 1 ou 2, dans lequel les axes optiques de toutes les microlentilles (38') sont situés en parallèle et sont alignés en direction d'une région oculaire (« eyebox ») définie par une position de conducteur.

4. Dispositif de rétroviseur selon la revendication 3, dans lequel la région oculaire est située à une distance d'observation de 60 cm et présente un diamètre de 80 mm, le dispositif d'affichage (18) présente une dimension de 150 mm, le réseau de microlentilles (38) présente un pas de réseau de 10 mm et un diamètre de lentille de 10 mm, et la distance entre le réseau de microlentilles (38) et le dispositif d'affichage (18) est de 20 mm, dans lequel les microlentilles (38") sont des lentilles planes-convexes et présentent une distance focale comprise entre 18 et 25 mm, de préférence de 21,3 mm.

5. Dispositif de rétroviseur selon la revendication 4, dans lequel une taille de pixel dans les zones d'image (18") est au maximum de 10 µm, de préférence de 6 µm.

6. Dispositif de rétroviseur selon l'une quelconque des revendications précédentes, qui est réalisé sous forme de rétroviseur.

7. Dispositif de rétroviseur selon l'une quelconque des revendications 1 à 5, qui est réalisé sous forme de miroir intérieur.

8. Véhicule automobile, comprenant un dispositif de rétroviseur (10, 100, 200) selon l'une quelconque des revendications 1 à 7.
